**Europäisches Patentamt**

**European Patent Office**

**Office européen des brevets**

(19)

(11) Veröffentlichungsnummer: **0 116 131**
A2

(12) # EUROPÄISCHE PATENTANMELDUNG

(21) Anmeldenummer: **83111508.4**

(22) Anmeldetag: **17.11.83**

(51) Int. Cl.³: **G 01 D 5/26**

(30) Priorität: **22.11.82 SE 8206634**

(43) Veröffentlichungstag der Anmeldung:
**22.08.84 Patentblatt 84/34**

(84) Benannte Vertragsstaaten:
**CH DE FR GB LI**

(71) Anmelder: **ASEA AB**

**S-721 83 Västeras(SE)**

(72) Erfinder: **Brogardh, Torgny, Prof.**
**Platverksgatan 140**
**S-724 74 Västeras(SE)**

(72) Erfinder: **Hök, Bertil**
**Sportfiskargatan 53**
**S-723 48 Västeras(SE)**

(72) Erfinder: **Ovrén, Christer, Dr.techn.**
**Vilddjursvägen 9**
**S-722 43 Västeras(SE)**

(74) Vertreter: **Boecker, Joachim, Dr.-Ing.**
**Rathenauplatz 2-8**
**D-6000 Frankfurt a.M. 1(DE)**

(54) **Faseroptischer Geber.**

(57) Ein faseroptischer Geber zum Messen physikalischer Größen, z.B. eines Druckes, einer Kraft, einer Beschleunigung, eines Flusses oder eines Niveaus, umfaßt einen Sender- und Empfängerteil zum Aussenden und Empfangen optischer Energie sowie einen Sensorteil, der an der Meßstelle angeordnet ist und mit dem Sender- und Empfängerteil über eine optische Faser (1) verbunden ist. Der Sensorteil enthält mindestens einen festen Körper (2, 4), der fotolumineszierende optische Energie in mindestens einem Wellenlängenbereich emittiert und ein geschlossenes oder offenes Volumen (8) enthält, welches durch mindestens zwei im wesentlichen parallele Flächen (5, 6) begrenzt ist, deren Abstand voneinander kleiner als die halbe Kohärenzlänge für die vom Senderteil ausgesandte oder für die vom Sensorteil lumineszierte optische Energie ist.

EP 0 116 131 A2

*Fig.1*

Patentanwalt und Rechtsanwalt
r.-Ing. Dipl.-Ing. Joachim B o e c k e r

**0116131**

6 Frankfurt/Main 1, 9.11.1983
Rathenauplatz 2-8    B/th 21 340 PE
Telefon: (06 11) *28 23 55
Telex: 4 189 066 itax d

A S E A    Aktiebolag, Västeras/Schweden


Faseroptischer Geber


Die Erfindung betrifft einen faseroptischen Geber gemäß
dem Oberbegriff des Anspruches 1.

Aus der DE-A 30 47 343 ist bereits ein faseroptisches Meßgerät zum Messen physikalischer Größen, wie z.B. eines
Druckes, einer Kraft, einer Beschleunigung, eines Flusses,
eines Niveaus, einer Temperatur usw. bekannt, das einen
fotolumineszierenden Körper enthält, dessen geometrische
Lage im Verhältnis zu einer optischen Faser ein Maß für
die Meßgröße ist. Die Lageinformation, dargestellt z.B.
durch die Intensitätsmodulation in einem oder mehreren Wellenlängenintervallen fotolumineszierter optischer Energie,
wird an eine Sender- und Empfängereinheit übertragen. Dadurch, daß die Lageinformation von der Abmessung der Faser
abhängig ist, ist der zugängliche Meßbereich und somit
auch das Auflösungsvermögen begrenzt.


Die Anwendung moderner Halbleitertechnologie erweist sich
als vorteilhaft für diese Sensoren. Die Herstellung geschieht satzweise, wobei die Herstellungskosten pro Sensoreinheit - grob gerechnet - proportional dem Quadrat
der Sensorabmessungen sind. Man ist daher bestrebt, einen
so hohen Miniaturisierungsgrad wie möglich zu erreichen.
Für Sensoren, welche auf der Lagemessung basieren, wird

/2

der erreichbare Miniaturisierungsgrad des zugänglichen Meßbereichs durch Unlinieritäten und aus Festigkeitsgründen begrenzt. Erstrebenswert ist ein Lagegeberprinzip mit einer möglichst großen Auflösung.

Für akustische Anwendungsbereiche und zur Schwingungsmessung bestehen weitere Gründe, nach Prinzipien mit einer hochauflösenden Lageregistrierung zu suchen.

Der Erfindung liegt die Aufgabe zugrunde, einen Geber der eingangs genannten Art zu entwickeln, der ein möglichst großes Auflösungsvermögen hat.

Zur Lösung dieser Aufgabe wird ein faseroptischer Geber nach dem Oberbegriff des Anspruches 1 vorgeschlagen, der erfindungsgemäß die im kennzeichnenden Teil des Anspruches 1 genannten Merkmale hat.

Vorteilhafte Weiterbildungen der Erfindung sind in den weiteren Ansprüchen genannt.

Die Erfindung basiert auf einer Kombination von interferometrischer Wechselwirkung in dünnen Schichten und Fotolumineszenz. Bei der Ausnutzung von Interferenz erhält man eine Signalmodulation, die von der Lichtwellenlänge statt von der geometrischen Faserabmessung abhängig ist. Da die Lichtwellenlängen mindestens um eine Größenordnung kleiner sind als der Faserdurchmesser, erzielt man mit Sensoren, welche die Interferenz ausnutzen, in wichtigen Beziehungen erhebliche Vorteile.

Die Signalmodulation basiert auf Interferenz, die durch mehrfache Reflexion zwischen den planparallelen Flächen entsteht. Die Ausnutzung von Interferenzerscheinungen bedeutet, daß sich die Signalmodulation auf eine Lichtwellenlänge bezieht, was einen sehr hohen Auflösungsgrad ermöglicht. Hierdurch wird der erreichbare Miniaturisie-

/3

rungsgrad für den Sensor erhöht, was einerseits eine erhöhte Wirtschaftlichkeit bei der Fertigung zur Folge hat und andererseits neue meßtechnische Möglichkeiten im akustischen Bereich und bei der Schwingungsmessung schafft.

Da der Geber nach der Erfindung Fotolumineszenz zur wellenlängenbasierten Signalaufteilung und Unterdrückung von Reflektionen in Faserverbindungen und Verzweigungen ausnutzt, wird der Aufbau der Meßanordnungen mit denen identisch, die in der DE-A-30 47 343 (SE-PS 418 904) beschrieben sind.

Anhand der Figuren soll die Erfindung näher erläutert werden. Es zeigen

Fig. 1 ein erstes Ausführungsbeispiel eines Gebers gemäß der Erfindung zur Druckmessung, der Fotolumineszenz in Verbindung mit Interferenz in dünnen Schichten ausnutzt,

Fig. 2a und 2b Diagramme, die zwei Möglichkeiten zur Ausnutzung einer wellenlängenbezogenen Signalmodulation zeigen,

Fig. 3a, 3b und 3c drei weitere Ausführungsformen von Gebern gemäß der Erfindung,

Fig. 4a und 4b zwei Ausführungsformen eines Gebers gemäß der Erfindung unter Verwendung von optischen Linsen.

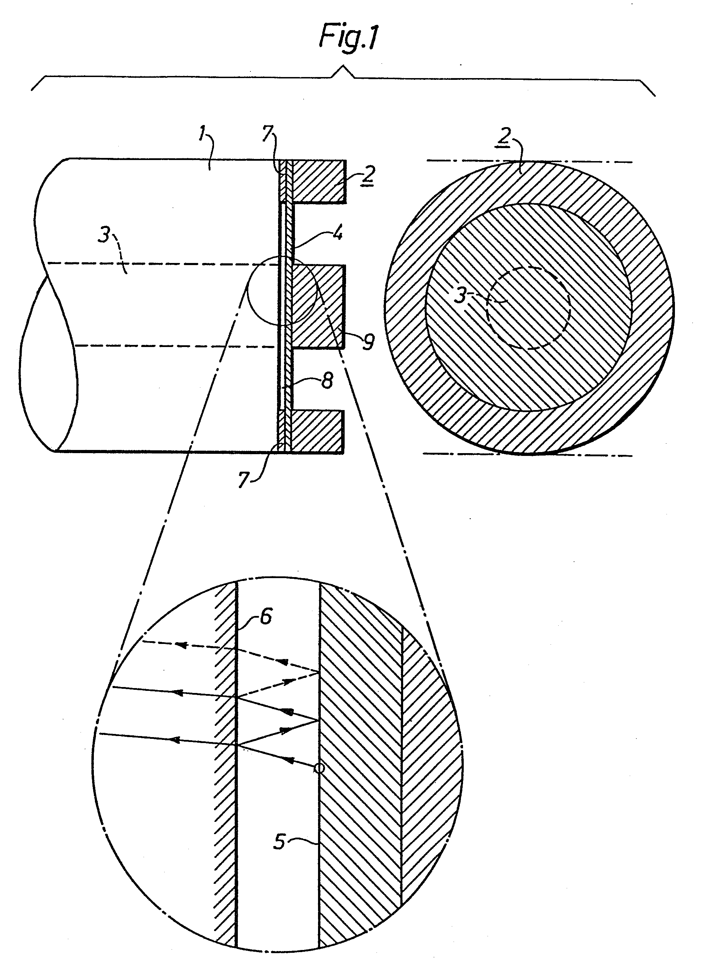

Figur 1 zeigt einen Sensor zur absoluten Druckmessung, der an dem einen Ende einer optischen Faser 1 angebracht ist. Das andere Ende ist an eine Sender- und Empfängereinheit nach Art der oben genannten DE-A-3047 343 angeschlossen. Der Sensorteil enthält einen festen Körper 2, der innerhalb mindestens eines Wellenlängenintervalls fotoluminesziert. Die Fotolumineszenz wird angeregt durch optische Energie (Licht), welche innerhalb der Kernregion

/4

- 4 -

3 durch die optische Faser 1 zugeführt wird. Der Körper 2 enthält in dem gezeigten Ausführungsbeispiel eine fest eingespannte Membran 4, die an ihrer der Stirnfläche 6 der Faser gegenüberliegenden Seite eine im wesentlichen ebene Fläche 5 hat. Die beiden Flächen 5 und 6 liegen im wesentlichen parallel zueinander, was durch das Distanzelement 7 erreicht wird. Das umlaufende Distanzelement 7 und die planparallelen Flächen 5 und 6 definieren ein in diesem Fall geschlossenes Volumen 8. Die von der Fläche 5 ausgehende optische Energie, die auf Lumineszenz oder Reflexion beruht, erfährt eine mehrfache Reflexion zwischen den beiden Flächen 5 und 6, bevor sie vollständig in die Faser eingetreten ist.

Der Abstand zwischen den planparallelen Flächen 5, 6 wird von dem Wert der zu messenden Größe bestimmt. Es kann somit wenigstens einer der Körper, welche die Flächen 5, 6 bilden (in Fig. 1 die Membran 4) elastisch sein, so daß der Abstand zwischen den Flächen von dem zu messenden Druck bestimmt wird.

Die Anzahl der an den beiden Flächen 5, 6 auftretenden Reflexionen hängt von deren Reflexionsvermögen ab. Dieses kann nach bekannten Techniken durch Beläge der Flächen mit Metallschichten oder dielektrischen Schichten beeinflußt werden, wobei eine Interferenz vorkommen kann. Wenn der Abstand zwischen den Flächen 5, 6 die halbe Kohärenzlänge für die optische Energie unterschreitet, entsteht eine Interferenz, wodurch die Intensitätsverteilung auf die transmittierte und die reflektierte optische Energie verändert wird.

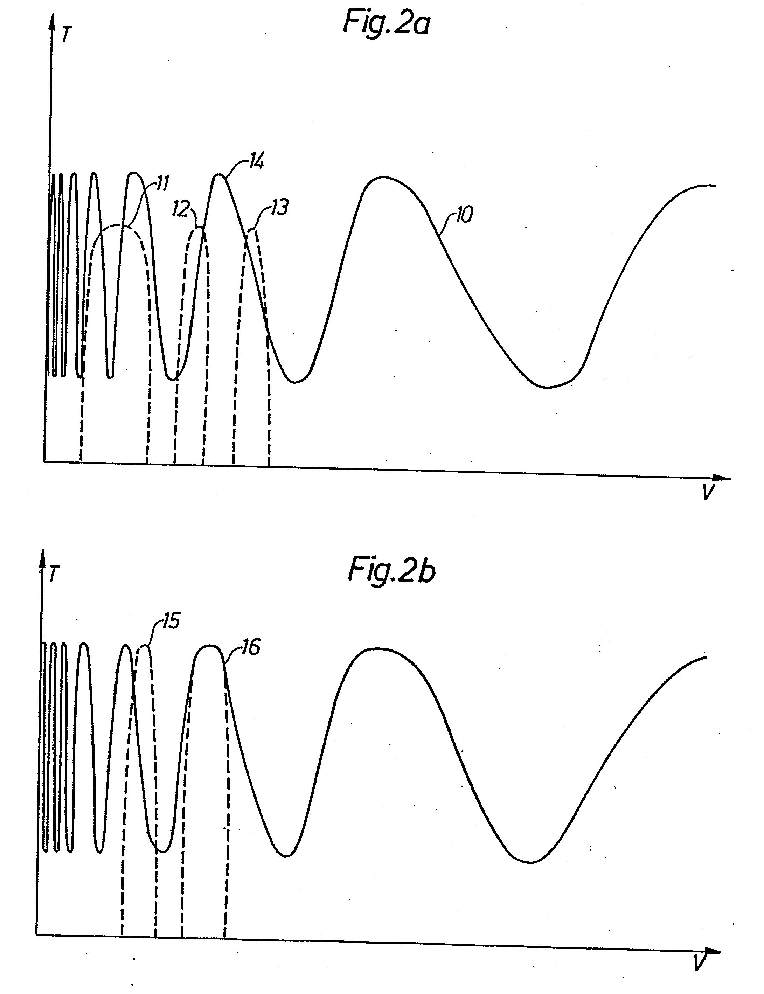

In Fig. 2a beschreibt die Kurve 10 die Transmissionsintensität T in Abhängigkeit der Wellenlänge V. Die Intensitätsmaxima, konstruktive Interferenz, treten auf, wenn der Abstand zwischen den Flächen 5, 6 ein Vielfaches der halben Wellenlänge für die optische Energie beträgt. Wenn

/5

eine Druckdifferenz zwischen dem Raum 8 und dem umgebenden Medium herrscht, so wird die Membran 4 dank ihrer Elastizität durchgebogen, wobei sich der Abstand zwischen der Faserendfläche und dem zentralen Teil 5 der Membran, der dem Faserkern gegenüber liegt, verändert. Dadurch, daß die Membran 4 mit einer versteifenden Masse 9 versehen ist, werden Biegebeanspruchungen im zentralen Teil 5 der Membran vermieden, die sonst die Lumineszenzeigenschaften der Membran beeinflussen könnten. Die Masse 9 kann bei einer modifizierten Ausführungsform der Erfindung als seismische Masse ausgebildet sein, um eine Ansprechempfindlichkeit für Beschleunigung zu schaffen. Die Druckempfindlichkeit wird bei dieser Ausführungsform dadurch beseitigt, daß der Raum 8 offen ist.

Die Parallelitätsabweichung zwischen den Flächen 5, 6 darf ein Zehntel der Wellenlänge mindestens einer der lumineszierenden Wellenlängen und/oder der Wellenlänge der vom Senderteil ausgesandten Energie nicht übersteigen. Wie bereits erwähnt, ist die eine der planparallelen Flächen 5, 6 die Grenzfläche einer optischen Faser 1.

Der vorgenannte reflektierende Belag kann aus einem dielektrischen Material bestehen, und die Dicke des dielektrischen Materials kann ein Vielfaches der halben Wellenlänge mindestens einer der Wellenlängen der lumineszierenden Energie oder der durch die Faser 1 gelieferten optischen Energie sein.

Der reflektierende Belag kann aus Metall bestehen, und, wie bereits erwähnt, kann der Raum 8 geschlossen sein. Der geschlossene Raum kann eventuell evakuiert sein, oder er kann auch durch ein festes Material ausgefüllt sein. Der Abstand zwischen den planparallelen Flächen 5, 6 wird von einem Distanzelement 7 sowie einem elastischen Teil des lumineszierenden Körpers bestimmt. Der Raum 8 kann vollständig von dem festen Körper ausgefüllt sein, und dieses

- 6 -

Material des Körpers kann angeordnet sein, um durch Fotolumineszenz optische Energie zu emittieren.

Der komplexe Zahlenwert für den Brechungsindex an dem durch die planparallelen Flächen 5, 6 begrenzten Volumen 8 kann ein Maß für die Größe sein, die gemessen werden soll.

Der feste Körper kann aus einem Halbleitermaterial bestehen und eventuell in mindestens zwei Schichten aufgeteilt sein. Das Volumen 8 ist in mindestens einem Wellenlängenintervall optisch transparent. Mindestens eine der planparallelen Flächen 5, 6 kann ein Teil einer Membran sein, deren Durchbiegung ein Maß für die zu messende Größe ist. Der Körper 2 kann aus transparentem Material mit einem Zusatz von Metallionen mit lumineszierenden Eigenschaften bestehen. Der Körper kann jedoch auch aus transparentem Material mit einem Zusatz an Neodymionen bestehen.

Wie aus Figur 1 hervorgeht, kann der Körper 2 aus einem homogenen Stück durch Wegätzung unerwünschter Bereiche hergestellt werden. Die geometrische Formgebung kann durch bekannte fotolithographische Techniken definiert werden. In Betracht kommendes Material, das die geeigneten lumineszierenden, mechanischen und chemischen Eigenschaften besitzt, sind monokristalline Halbleiter mit direktem Bandabstand, wie z.B. $GaAs$ , $Al_xGa_{1-x}As$.

Die Befestigung und Dichtung zwischen dem Distanzelement 7 und der Faserendfläche 6 unter exakter geometrischer Kontrolle kann mit bekannten Techniken, wie z.B. durch elektrostatische Verbindung, geschehen.

Die Figuren 2a und 2b beschreiben zwei Verfahren, um die Charakteristik der Interferenzkurve 10 mit Fotolumineszenz zu kombinieren. In Figur 2a wird der Sensor beispiels-

/7

weise mit dem Licht einer Leuchtdiode angeregt, deren emittierte optische Energie in einem Wellenlängeninterval 11 liegt, so daß man eine gewisse Transmission durch das Volumen 8 für alle im Betrieb vorkommenden Abstände zwischen den Flächen 5 und 6 erhält. Ferner wird die Membran 4 so gewählt, daß je ein Fotolumineszenzmaximum 12 bzw. 13 auf jeder Seite eines Interferenzmaximums 14 liegt. Wenn das Interferenzmaximum 14 aufgrund einer Veränderung des Abstandes zwischen den Flächen 5, 6 verschoben wird, dann tritt eine Veränderung der Intensitätsverteilung zwischen den beiden Fotolumineszenzmaxima 12, 13 ein. Diese Veränderung kann durch eine Detektoranordnung erfaßt werden, wie sie in der oben genannten Druckschrift beschrieben wird.

In Figur 2b liegt das Wellenlängeninterval 15 im Verhältnis zur Intensitätskurve so, daß eine starke Modulation der reflektierten optischen Energie stattfindet, während die Fotolumineszenz 16 eine verhältnismäßig schwache Abhängigkeit zeigt. Diese Anordnung der Sensoren kann z.B. dort verwendet werden, wo die stationäre Lage der Membran nicht von Interesse ist, beispielsweise bei der Messung von akustischen Signalen oder Schwingungen.

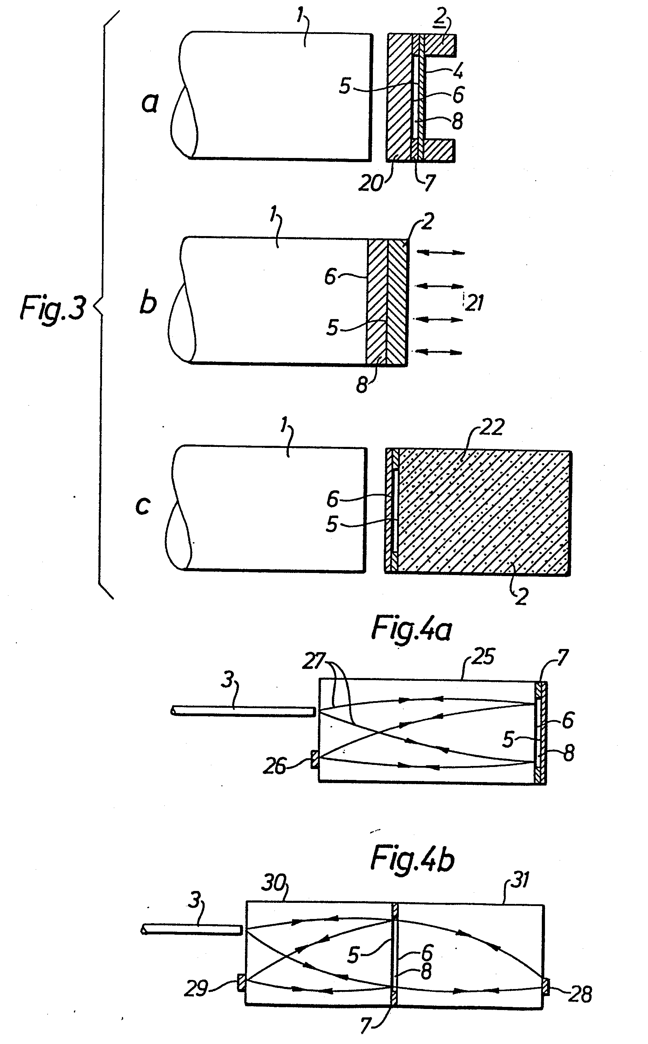

Figur 3a zeigt einen Druckgeber in einer etwas modifizierten Ausführungsform. Hier wird die eine das Volumen 8 begrenzende planparallele Fläche nicht von einem planpolierten Faserende gebildet, sondern von einer Schicht 20, die mit dem Körper 2 zusammengesetzt ist. Die Schicht 20 hat eine Dicke, die größer ist als die vorkommenden Kohärenzlängen.

Figur 3b zeigt eine Ausführungsform, bei der das Volumen 8 mit festem Material ausgefüllt ist, welches mit den Körpern 2 eine Einheit bildet. Kräfte, die in Richtung

/8

- 8 -

der Pfeile 21 wirken, verursachen entweder eine Veränderung des Abstandes zwischen den Flächen 5 und 6 (Fig. 3a) oder eine Veränderung des Brechungsindexes des festen Materials (Figur 3b), was eine Variation der optischen Weglänge (pass) mit einer daraus resultierenden entsprechenden Modulation der Kurve 10 bewirkt.

In Figur 3c schließlich besteht der fotolumineszierende Körper 2 aus einem transparenten Material, das Metallionen mit Lumineszenzeigenschaften, z.B. Neodymionen, enthält.

Das nach außen geschlossene oder offene Volumen 8 kann durch eine oder zwei planparallele Flächen 5, 6, wie z.B. durch die Membran 4, begrenzt werden.

Die vorstehend beschriebenen Ausführungsformen stellen gewisse Anforderungen an die verwendete optische Faser. Deren numerische Apertur darf nicht allzu groß sein, da sonst die Winkelverteilung der sich fortpflanzenden optischen Energie sehr breit ist, was die Wirkungen der im Sensor ausgenutzten Interferenzphänomene neutralisieren kann. Dies kann durch die Verwendung einer oder mehrerer Linsen im Sensorteil vermieden werden, wie es in Figur 4 gezeigt ist. Die Faser 3, die eine große numerische Apertur haben kann, ist mit ihrer Endfläche an einer zylindrischen GRIN-Linse 25 angeordnet, wobei das aus der Faser stammende Strahlenbündel 27 an der anderen Endfläche 6 der Linse im wesentlichen parallel ist. An dieser Endfläche ist eine Interferenzstruktur 5, 6, 7, 8 der oben beschriebenen Art angebracht. Das von der Interferenzstruktur reflektierte Licht wird auf ein lumineszierendes Material 26 fokussiert, von dem Lumineszenzlicht ausgeht, das von der Interferenzstruktur 5, 6, 7, 8 in die Faser 3 zurückgeworfen wird. Dadurch, daß die Reflexion an der Interferenzstruktur für die Wellenlängen des Anregungs- und des Lumineszenzlichts unter-

/9

schiedlich von der Meßgröße beeinflußt wird, können die relativen Intensitäten beider Lichtarten auf dieselbe Weise, wie oben beschrieben, als Signalträger benutzt werden.

Ein weiteres Ausführungsbeispiel gemäß der Erfindung zeigt Figur 4b. Hier werden zwei GRIN-Linsen 30, 31 zur optischen Signalteilung zwischen zwei Lumineszenzquellen 28, 29 mit Hilfe der Interferenzstruktur 5, 6, 7, 8 benutzt, deren Reflexions- und Transmissionseigenschaften von der Meßgröße abhängen. Bei dieser Ausführungsform wird die Meßgröße durch die Intensitätsrelation zwischen den beiden Lumineszenzbeiträgen von den Lumineszenzmaterialien 28 bzw. 29 beschrieben.

Die oben beschriebenen Ausführungsformen können im Rahmen des allgemeinen offenbarten Erfindungsgedankens in vielfacher Weise variiert werden.

Patentanwalt und Rechtsanwalt
Dr.-Ing. Dipl.-Ing. Joachim B o e c k e r

**0116131**

6 Frankfurt/Main 1 , 9.11.1983
Rathenauplatz 2-8      21 340 PE
Telefon: (06 11) *28 23 55
Telex: 4 189 066 itax d

– 10 –

## Patentansprüche

1. Faseroptischer Geber zum Messen physikalischer Größen, wie z.B. eines Druckes, einer Kraft, einer Beschleunigung, eines Flusses oder eines Niveaus, mit einem Sender- und Empfängerteil zum Aussenden und Empfangen optischer Energie und mit mindestens einer optischen Faser (1) zur Übertragung optischer Energie zu und von einem an der Meßstelle angeordneten Sensorteil, dadurch gekennzeichnet, daß der Sensorteil mindestens einen festen Körper (2, 4) enthält, der fotolumineszierende optische Energie in mindestens einem Wellenlängenbereich emittiert und ein geschlossenes oder offenes Volumen (8) enthält, welches durch mindestens zwei im wesentlichen planparallele Flächen (5, 6) begrenzt ist, deren Abstand voneinander kleiner als die halbe Kohärenzlänge der vom Senderteil ausgesandten oder der vom Senstorteil lumineszierten optischen Energie ist.

2. Faseroptischer Geber nach Anspruch 1, dadurch gekennzeichnet, daß der Abstand zwischen den planparallelen Flächen (5, 6) in Abhängigkeit der zu messenden Größe variierbar ist.

3. Faseroptischer Geber nach Anspruch 1, dadurch gekennzeichnet, daß der komplexe Zahlenwert für den Brechungsindex des in dem durch die planparallelen Flächen (5, 6) begrenzten Volumen (8) enthaltenen Mediums ein Maß für die Meßgröße ist.

4. Faseroptischer Geber nach einem der vorhergehenden Ansprüche, dadurch gekennzeichnet, daß die Parallelitätsabweichungen zwischen den Flächen (5, 6) ein Zehntel der Wellenlänge mindestens einer der Wellenlängen der lumines-

/ 11

zierten Energie und/oder der Wellenlänge der vom Senderteil ausgesandten Energie nicht übersteigen.

5. Faseroptischer Geber nach einem der vorhergehenden
Ansprüche, dadurch gekennzeichnet, daß eine der planparallelen Flächen (5, 6) die Grenzfläche einer optischen
Faser (1) ist.

6. Faseroptischer Geber nach einem der vorhergehenden
Ansprüche, dadurch gekennzeichnet, daß die planparallelen
Flächen (5, 6) mindestens einen reflektierenden Belag
tragen.

7. Faseroptischer Geber nach Anspruch 6, dadurch gekennzeichnet, daß der reflektierende Belag aus dielektrischem
Material besteht.

8. Faseroptischer Geber nach Anspruch 7, dadurch gekennzeichnet, daß die Dicke des dielektrischen Materials ein
Vielfaches der halben Wellenlänge von mindestens einer
Wellenlänge der lumineszierten optischen Energie oder
der vom Senderteil ausgesandten optischen Energie ist.

9. Faseroptischer Geber nach Anspruch 6, dadurch gekennzeichnet, daß der reflektierende Belag aus metallischem
Material besteht.

10. Faseroptischer Geber nach einem der vorhergehenden
Ansprüche, dadurch gekennzeichnet, daß der Abstand zwischen den planparallelen Flächen (5, 6) von einem Distanzelement (7) sowie einem elastischen Teil (4) des lumineszierenden Körpers bestimmt wird.

11. Faseroptischer Geber nach einem der vorhergehenden
Ansprüche, dadurch gekennzeichnet, daß der feste Körper
mindestens ein Halbleitermaterial, wie z.B. GaAs,
$Al_xGa_{1-x}As$ enthält.

- 12 -

12. Faseroptischer Geber nach einem der vorhergehenden Ansprüche, dadurch gekennzeichnet, daß das Volumen (8) für mindestens ein   Wellenlängenintervall optisch transparent ist.

13. Faseroptischer Geber nach einem der vorhergehenden Ansprüche, dadurch gekennzeichnet, daß mindestens eine der planparallelen Flächen (5, 6) Teil einer Membran ist, deren Durchbiegung ein Maß für die zu messende Größe ist.

14. Faseroptischer Geber nach einem der vorhergehenden Ansprüche, dadurch gekennzeichnet, daß der Körper (2) mindestens ein transparentes Material mit einem Zusatz von Metallionen mit lumineszierenden Eigenschaften, z.B. Neodymionen, enthält.

15. Faseroptischer Geber nach einem der vorhergehenden Ansprüche, dadurch gekennzeichnet, daß der Sensorteil zusätzlich mindestens eine Linse oder ein Linsensystem, z.B. eine GRIN-Linse (25, 30, 31) enthält.

/13

9.11.198.
21 340 FE
0116131

Fig.1

2/3

## Fig.2a

## Fig.2b

Fig.3

a

b

c

Fig.4a

Fig.4b